# EUROPEAN PATENT SPECIFICATION

(11) **EP 3 812 670 B1**
(45) Date of publication and mention of the grant of the patent: **14.10.2026**
(21) Application number: 18923043.6
(22) Date of filing: 15.11.2018
(51) Int. Cl.: F25D 11/02, F25D 17/04, A23B 7/148, B01D 53/22, F25D 23/00, A23B 7/04

(54) **REFRIGERATOR HAVING OXYGEN CONTROL AND FRESHNESS KEEPING FUNCTIONS**
KÜHLSCHRANK MIT SAUERSTOFFREGELUNG -UND FRISCHHALTEFUNKTIONEN
RÉFRIGÉRATEUR DOTÉ DE FONCTIONS DE RÉGULATION DE L'OXYGÈNE ET DE CONSERVATION DE FRAÎCHEUR

(30) Priority: 19.06.2018 CN 201810629138
(43) Date of publication of application: 28.04.2021
(73) Proprietor: Qingdao Haier Co., Ltd., Shandong 266101 (CN)
(72) Inventor: WANG, Lei, Qingdao, Shandong 266101 (CN); JIANG, Bo, Qingdao, Shandong 266101 (CN); CHEN, Jianquan, Qingdao, Shandong 266101 (CN); YANG, Chun, Qingdao, Shandong 266101 (CN); LIU, Haoquan, Qingdao, Shandong 266101 (CN)
(74) Representative: Winter, Brandl - Partnerschaft mbB
(86) International application number: PCT/CN2018/115566
(87) International publication number: WO 2019/242215

(56) References cited:
- WO-A1-2018/099374
- WO-A1-2018/099466
- CN-A- 106 546 053
- CN-A- 106 593 818
- CN-A- 106 766 565
- CN-A- 108 759 244
- CN-U- 206 399 083
- CN-U- 206 399 085

## Description

### TECHNICAL FIELD

The present invention relates to the field of household appliances, and in particular, to a refrigerator with an oxygen-control freshness preservation function.

### BACKGROUND

A refrigerator facilitates home lives greatly due to a low-temperature preservation function. However, with an improvement of the quality of life, a consumer has an increasing requirement for freshness preservation of stored foods, and a conventional refrigerator has been unable to meet an increasing demand of a user. Based on this, the following solution has been explored in the industry. A freshness preservation compartment is provided in a cabinet of the refrigerator, and a freshness preservation effect of the freshness preservation compartment is optimized by vacuumizing the freshness preservation compartment or reducing an oxygen concentration therein. Based on a design requirement of this function, usually, the refrigerator is required to be provided with a gas extraction pump for sucking gas in the freshness preservation compartment to facilitate reduction of an oxygen content of air therein. In an existing design, usually, the gas extraction pump is provided in a compressor compartment having a compressor. However, such a design has the following problems.

1. When the refrigerator runs, a temperature which is too high in the compressor compartment may affect an efficient operation of the gas extraction pump and even a service life thereof, such that a target oxygen content is unable to be reached in the freshness preservation compartment, which reduces the freshness preservation effect of the freshness preservation compartment.
2. In the compressor compartment, a simultaneous operation of the gas extraction pump and the compressor is prone to generate a resonance, which increases a noise of the refrigerator and does not meet a silent requirement of a user for refrigerators.

In view of this, it is necessary to provide an improved refrigerator to solve the above-mentioned problems.

CN 206 399 085 U discloses a cold-stored refrigeration device according to the preamble of claim 1.

CN 106 546 053 A discloses refrigerating and freezing device, which comprises a box body, an air control film assembly and an air extraction pump. The box body is provided with an inner container, a casing and a heat insulation layer. The inner container is provided with a storage space; a storage container is arranged in the storage space; an air control fresh keeping space is arranged in the storage container. The air control film assembly is configured into a state that much oxygen in the air flow in the peripheral space of the air control film assembly enters a rich-oxygen gas collecting cavity through an air control film relative to nitrogen gas in the air flow in the peripheral space of the air control film assembly. The air extraction pump is arranged in the heat insulation layer. The inlet end of the air extraction pump communicates with the oxygen-rich gas collecting cavity of the air control film assembly through a pipeline, so that the gas penetrating into the oxygen-rich gas collecting cavity is extracted and exhausted out of the storage container.

CN 206 399 083 U discloses an air-cooled refrigerator comprising a housing with a storage space and a cooling space. A drain line is installed within the storage space and connected to the cooling space, allowing it to collect condensation from the evaporator. A membrane module facilitates gas separation, extracting oxygen and nitrogen from the surrounding air. The oxygen-enriched gas is directed into a collection chamber, while a suction pump removes it through an exhaust pipeline and an exhaust pipe, releasing it outside the storage vessel. The exhaust pipe is designed so that the extracted oxygen-rich gas exchanges heat either directly or indirectly with the drain line. This air-cooled refrigerator utilizes the energy of the exhaust gas, which has a higher temperature than the drain line inlet, to melt residual ice at the drain line's entrance. This prevents blockages and ensures efficient energy utilization.

### SUMMARY

The present invention seeks to solve one of the technical problems in a prior art to at least some extent. In order to achieve the above-mentioned inventive object, the present invention provides a refrigerator with an oxygen-control freshness preservation function according to the appended set of claims.

The present invention has the following beneficial effects. Oxygen-control freshness preservation of foods in a freshness preservation compartment is realized with the refrigerator according to the present invention. A structure in which a gas extraction pump is separated from a compressor effectively solves a problem of a running resonance in an existing design, and may reduce a running noise of the refrigerator; gas sucked from the freshness preservation compartment is introduced into the compressor compartment to cool the compressor, which may prolong a service life of the compressor and optimize a running performance thereof.

### BRIEF DESCRIPTION OF THE DRAWINGS

FIG. 1 shows a schematic diagram of a refrigerator according to the present invention at a first angle;
FIG. 2 shows a schematic diagram of the refrigerator shown in FIG. 1 at a second angle with a rear housing removed;
FIG. 3 shows a schematic diagram in which a refrigerating liner, a gas extraction assembly, a drainage pipe and an evaporating pan are fitted;
FIG. 4 shows a schematic diagram in which a freshness preservation compartment and the gas extraction assembly are fitted;
FIG. 5 shows a schematic exploded diagram of the gas extraction assembly; and
FIG. 6 shows a schematic diagram in which the gas extraction pump and a mounting rack are fitted.

### DETAILED DESCRIPTION

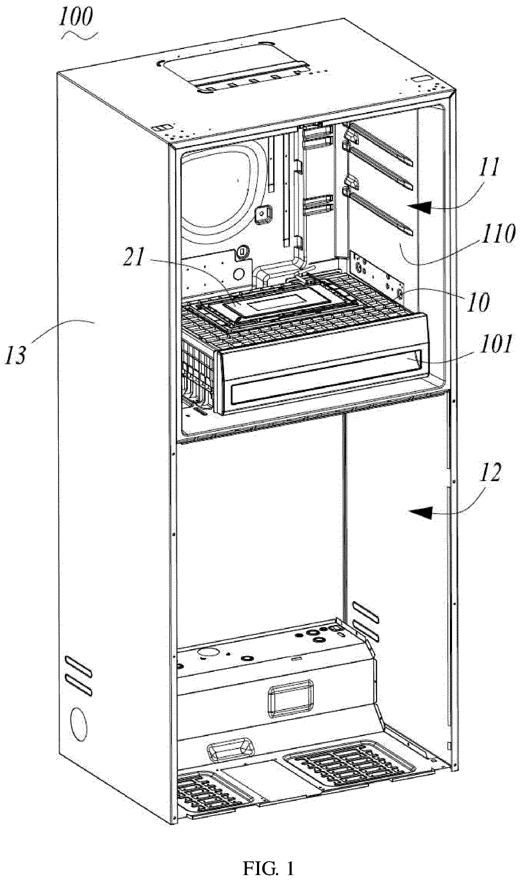

The present invention is below described in detail in combination with each embodiment illustrated in drawings. FIGS. 1-6 show a preferable embodiment of the present invention.

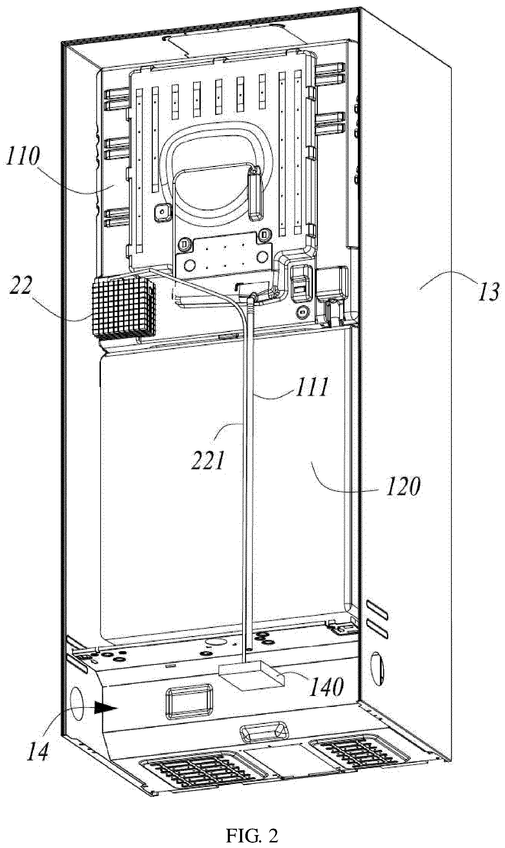

FIGS. 1 and 2 show schematic diagrams of a three-dimensional structure of a refrigerator according to the present invention at two different angles, and the refrigerator according to the present invention has an oxygen-control freshness preservation function. Specifically, the refrigerator with the oxygen-control freshness preservation function includes a refrigerator body 100 having a compressor bin 14 formed at a bottom, for mounting a compressor (not shown), and a freshness preservation space 10 located above the compressor bin 14.

Specifically, in the present embodiment, the refrigerator body 100 has therein a refrigerating liner 110 for defining a refrigerating compartment 11, and the freshness preservation space 10 is located in the refrigerating compartment 11; the refrigerator further has a freezing compartment 12 located between the refrigerating compartment 11 and the compressor bin 14 and defined by a freezing liner 120. In other words, in the present embodiment, the refrigerator body of the refrigerator according to the present invention successively includes the refrigerating compartment 11, the freezing compartment 12 and the compressor bin 14 from top to bottom.

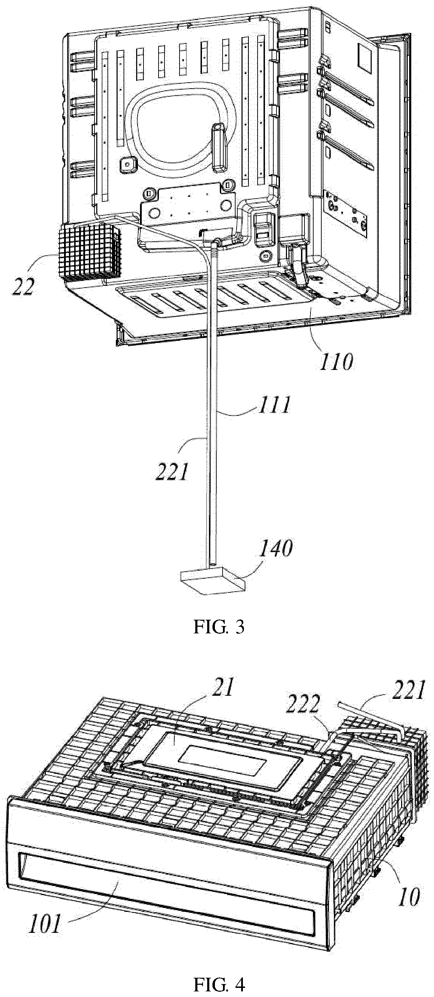

The refrigerator according to the present invention further has an oxygen control device for reducing an oxygen content in the freshness preservation space 10, and as shown in FIGS. 3-5, the oxygen control device includes a gas-regulating membrane assembly 21 and a gas extraction assembly 22.

In an implementation, the gas-regulating membrane assembly 21 has at least one controlled atmosphere membrane (not shown) permeating gas selectively, and the controlled atmosphere membrane has an air inflow side (not shown) coming into contact with air in the freshness preservation space 10 and an air outgoing side (not shown) opposite to the air inflow side. It may be understood that two sides of the controlled atmosphere membrane, formed as the air inflow side and the air outgoing side respectively, are separated by the controlled atmosphere membrane spatially; when the air in the freshness preservation space 10 enters the air outgoing side from the air inflow side of the controlled atmosphere membrane, an oxygen-nitrogen content ratio of the gas entering the air outgoing side is greater than the oxygen-nitrogen content ratio of the gas in the freshness preservation space 10.

In the present invention, the gas extraction assembly 22 constituting the oxygen control device is provided outside the freshness preservation space 10 and has a gas extraction pump 220, and the gas extraction pump 220 has a gas inlet pipe 222 communicated with the air outgoing side of the controlled atmosphere membrane and a gas outlet pipe 221 for exhausting the gas at the air outgoing side of the controlled atmosphere membrane to the compressor bin 14 to cool the compressor. It may be easily understood that in the present invention, the gas extraction pump 220, communicated with the compressor bin 14 through the gas outlet pipe 221, is also located outside the compressor bin 14.

In the present invention, when the gas extraction pump 220 runs, a negative pressure less than a pressure of the air inflow side (i.e., the freshness preservation space 10 side) of the controlled atmosphere membrane may be formed at the air outgoing side thereof communicated with the gas inlet pipe 222, such that the gas in the freshness preservation space 10 enters the air outgoing side of the controlled atmosphere membrane; due to properties of the controlled atmosphere membrane, oxygen passes through the controlled atmosphere membrane more easily than nitrogen, such that after the gas extraction pump 220 runs for a period of time, an oxygen content of the air in the freshness preservation space 10 is lower than an oxygen content of normal air. That is, an atmosphere rich in nitrogen and deficient in oxygen to facilitate freshness preservation of foods is formed in the freshness preservation space 10.

With the refrigerator according to the present invention, the atmosphere rich in nitrogen and deficient in oxygen to facilitate the freshness preservation of the foods is formed in the freshness preservation space 10. In the atmosphere, an intensity of aerobic respiration of fruits and vegetables is reduced by decreasing the content of the oxygen in a fruit-vegetable preservation space, and meanwhile, a basic respiration action is guaranteed to prevent anaerobic respiration of the fruits and vegetables, thereby achieving an aim of long-term preservation of the fruits and vegetables. Further, the atmosphere also has a large amount of gas, such as the nitrogen, or the like, and an efficiency of refrigerating an object in a controlled-atmosphere freshness preservation space is not reduced, such that the fruits and vegetables may be stored effectively.

Furthermore, in the present invention, separation of the gas extraction pump 220 from the compressor effectively solves a problem of a running resonance in an existing design, and may reduce a running noise of the refrigerator; the gas sucked from the refrigerator compartment is introduced into the compressor bin to cool the compressor, which may prolong a service life of the compressor and optimize a running performance thereof.

Further, as shown in FIGS. 2 and 3, an evaporating pan 140 is provided in the compressor bin 14, and the refrigerator further has a drainage pipe 111 connected with the refrigerating liner 110 to drain liquid water therein into the evaporating pan 140. Usually, an evaporator, provided in the refrigerating liner 110, is required to be defrosted when the refrigerator runs, and defrosting water is drained to the evaporating pan 140 through the drainage pipe 111. In the present embodiment, the gas outlet pipe 221 connected with the gas extraction pump 220 approaches the drainage pipe 111 from the gas extraction pump 220 and extends into the compressor bin 14 through the drainage pipe 111. Based on the arrangement, when the refrigerator is assembled, the drainage pipe 111 is fixed synchronously with the gas outlet pipe 221, thereby simplifying a manufacturing process of the refrigerator and decreasing a number of fixing pieces for fixing the drainage pipe 111 and the gas outlet pipe 221, thus improving an efficiency of assembling the refrigerator and reducing a manufacturing cost thereof.

In an implementation, an air outlet of the gas outlet pipe 221 extends right above the evaporating pan 140. Considering that a certain amount of moisture is present in the gas sucked by the gas extraction pump 220, the extension of the air outlet of the gas outlet pipe 221 right above the evaporating pan 140 avoids unnecessary damages due to a water drop formed in the gas outlet pipe 221 dripping into the compressor bin 14.

In the present invention, a casing 13 is further provided outside the refrigerating liner 110 and the freezing liner 120, a thermal insulation layer (not shown) is formed among the refrigerating liner 110, the freezing liner 120 and the casing 13, and the gas extraction assembly 22 is provided in the thermal insulation layer, thus further reducing a vibration and the noise caused when the gas extraction pump 220 runs.

In the present embodiment, as shown in FIGS. 1 and 2, the freshness preservation space 10 is provided at a bottom of the refrigerating compartment 11, and the gas extraction pump 220 is provided at a lower corner of a rear wall of the refrigerating liner 110. Such an arrangement can shorten a length of the gas inlet pipe 222 between the gas extraction pump 220 and the gas-regulating membrane assembly 21, and reduce a vacuum loss of the gas-regulating membrane assembly 21.

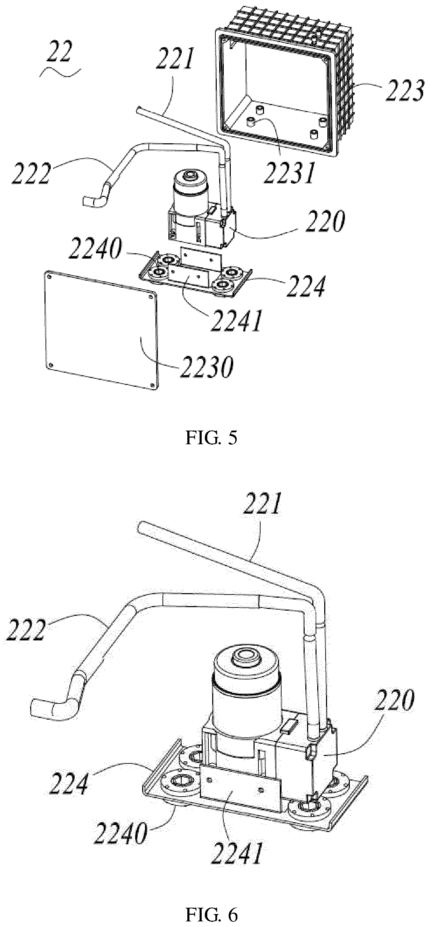

As shown in FIGS. 5 and 6, the gas extraction assembly 22 in the present embodiment further has an accommodating box 223 mounted at the rear wall of the refrigerating liner 110 and a mounting rack 224 connected with the gas extraction pump 220 and mounted in the accommodating box 223 by a plurality of shock-absorption cushion blocks 2240. Specifically, a pair of clamp plates 2241 for fixing the gas extraction pump 220 are formed at the mounting rack oppositely, and the gas extraction pump 220 is clamped between the two clamp plates 2241 and fixed by a screw or a buckle; a plurality of mounting portions 2231 for being fixedly fitted with the plural shock-absorption cushion blocks 2240 are formed at an inner wall of the accommodating box 223; a side wall of the accommodating box 223 is further provided with a through hole for the gas outlet pipe 221 and the gas inlet pipe 222 to pass through, and an opening for placing the gas extraction pump 220, formed at a side of the accommodating box 223, is covered with a cover plate 2230. Based on this implementation, the gas extraction pump 220 is fixed in the accommodating box 223 relatively stably, and the running vibration of the gas extraction pump 220 can be reduced effectively.

As shown in FIGS. 1 and 4, in the present embodiment, the freshness preservation space 10 has a drawer 101 provided with a door for opening and closing the freshness preservation space 10, dispensing with the drawer 101.

Referring to FIG. 4, the gas-regulating membrane assembly 21 is provided outside a top wall of the freshness preservation space 10, and it may be understood that in order to ensure that the air in the freshness preservation space 10 comes into contact with the air inflow side of the controlled atmosphere membrane, an opening (not shown) is provided outside the top wall of the freshness preservation space 10 for the air therein to come into contact with the air inflow side of the controlled atmosphere membrane.

## Claims

1. A refrigerator with an oxygen-control freshness preservation function, comprising a refrigerator body (100) having a compressor bin (14) formed at a bottom, for mounting a compressor, and a freshness preservation space (10) located above the compressor bin (14), wherein the refrigerator further has an oxygen control device for reducing an oxygen content in the freshness preservation space (10), and the oxygen control device comprises a gas-regulating membrane assembly (21) and a gas extraction assembly (22); the gas-regulating membrane assembly (21) has at least one controlled atmosphere membrane permeating gas selectively, the controlled atmosphere membrane has an air inflow side coming into contact with air in the freshness preservation space (10) and an air outgoing side opposite to the air inflow side, and the gas-regulating membrane assembly (21) is configured to enable an oxygen-to-nitrogen content ratio of gas entering the air outgoing side from the air inflow side to be greater than an oxygen-to-nitrogen content ratio of gas in the freshness preservation space (10); the gas extraction assembly (22) is provided outside the freshness preservation space (10) and has a gas extraction pump (220) having a gas inlet pipe (222) communicated with the air outgoing side of the controlled atmosphere membrane and a gas outlet pipe (221) for exhausting the gas at the air outgoing side of the controlled atmosphere membrane to the compressor bin (14) to cool the compressor, **characterized in that**:
the refrigerator body (100) has therein a refrigerating liner (110) for defining a refrigerating compartment (11), and the freshness preservation space (10) is located in the refrigerating compartment (11),
a thermal insulation layer is formed outside the refrigerating liner (110), and the gas extraction assembly (22) is provided in the thermal insulation layer,
the refrigerator compartment is provided at a bottom of the refrigerating compartment (11), and the gas extraction pump (220) is provided at a lower corner of a rear wall of the refrigerating liner (110), and
the gas extraction assembly (22) further has an accommodating box (223) mounted at the rear wall of the refrigerating liner (110) and a mounting rack (224) connected with the gas extraction pump (220) and mounted in the accommodating box (223) by a plurality of shock-absorption cushion blocks (2240);
the gas-regulating membrane assembly (21) is provided outside a top wall of the freshness preservation space (10), and an opening is provided outside the top wall of the freshness preservation space (10) for the air therein to come into contact with the air inflow side of the controlled atmosphere membrane;
wherein an evaporating pan (140) is provided in the compressor bin (14), the refrigerator further has a drainage pipe (111) connected with the refrigerating liner (110) to drain liquid water therein into the evaporating pan (140), and the gas outlet pipe (221) approaches the drainage pipe (111) from the gas extraction pump (220) and extends into the compressor bin (14) through the drainage pipe.

2. The refrigerator with the oxygen-control freshness preservation function according to claim 1, wherein an air outlet of the gas outlet pipe (221) extends right above the evaporating pan (140).

3. The refrigerator with the oxygen-control freshness preservation function according to claim 1, wherein the freshness preservation space (10) has a drawer (101) able to slide in and out.

4. The refrigerator with the oxygen-control freshness preservation function according to claim 1, further having a freezing compartment (12) located between the refrigerating compartment (11) and the compressor bin (14).

## Patentansprüche

1. Kühlschrank mit einer Funktion zur sauerstoffgesteuerten Frischhaltung, aufweisend einen Kühlschrankkörper (100) mit einem an einem Boden ausgebildeten Kompressorfach (14) zur Aufnahme eines Kompressors und einem oberhalb des Kompressorfachs (14) angeordneten Frischhalteraum (10), wobei der Kühlschrank ferner eine Sauerstoffsteuerungsvorrichtung zur Reduzierung eines Sauerstoffgehalts im Frischhalteraum (10) aufweist, und die Sauerstoffsteuerungsvorrichtung eine Gasregulierungsmembrananordnung (21) und eine Gasextraktionsanordnung (22) aufweist; die Gasregulierungsmembrananordnung (21) mindestens eine selektiv gasdurchlässige Schutzatmosphärenmembran aufweist, wobei die Schutzatmosphärenmembran eine mit der Luft im Frischhalteraum (10) in Kontakt stehende Lufteinströmseite und eine der Lufteinströmseite gegenüberliegende Luftausströmseite aufweist, und die Gasregulierungsmembrananordnung (21) derart ausgebildet ist, dass ein Sauerstoff-Stickstoff-Gehaltsverhältnis des von der Lufteinströmseite auf die Luftausströmseite eintretenden Gases größer ist als ein Sauerstoff-Stickstoff-Gehaltsverhältnis des Gases im Frischhalteraum (10); die Gasextraktionsanordnung (22) außerhalb des Frischhalteraums (10) angeordnet ist und eine Gasextraktionspumpe (220) aufweist, die ein mit der Luftausströmseite der Schutzatmosphärenmembran in Verbindung stehendes Gaseinlassrohr (222) und ein Gasauslassrohr (221) zum Abführen des Gases an der Luftausströmseite der Schutzatmosphärenmembran in das Kompressorfach (14) zur Kühlung des Kompressors aufweist,
**dadurch gekennzeichnet, dass** der Kühlschrankkörper (100) eine Kühlauskleidung (110) zur Begrenzung eines Kühlabteils (11) aufweist und der Frischhalteraum (10) im Kühlabteil (11) angeordnet ist,
außerhalb der Kühlauskleidung (110) eine Wärmedämmschicht ausgebildet ist und die Gasextraktionsanordnung (22) in der Wärmedämmschicht angeordnet ist,
das Kühlschrankfach am Boden des Kühlabteils (11) angeordnet ist und die Gasextraktionspumpe (220) an einer unteren Ecke einer Rückwand der Kühlauskleidung (110) angeordnet ist, und
die Gasextraktionsanordnung (22) ferner ein an der Rückwand der Kühlauskleidung (110) montiertes Aufnahmegehäuse (223) und ein mit der Gasextraktionspumpe (220) verbundenes und mittels einer Mehrzahl von Stoßdämpfungspolsterblöcken (2240) im Aufnahmegehäuse (223) montiertes Montagegestell (224) aufweist; die Gasregulierungsmembrananordnung (21) außerhalb einer Deckenwand des Frischhalteraums (10) angeordnet ist und außerhalb der Deckenwand des Frischhalteraums (10) eine Öffnung vorgesehen ist, durch die die darin befindliche Luft mit der Lufteinströmseite der Schutzatmosphärenmembran in Kontakt treten kann;
wobei im Kompressorfach (14) eine Verdampfungsschale (140) vorgesehen ist, der Kühlschrank ferner ein mit der Kühlauskleidung (110) verbundenes Ablaufrohr (111) zum Ableiten von darin befindlichem flüssigen Wasser in die Verdampfungsschale (140) aufweist, und das Gasauslassrohr (221) von der Gasextraktionspumpe (220) ausgehend an das Ablaufrohr (111) herangeführt ist und sich durch das Ablaufrohr in das Kompressorfach (14) erstreckt.

2. Kühlschrank mit einer Funktion zur sauerstoffgesteuerten Frischhaltung nach Anspruch 1, wobei sich ein Luftauslass des Gasauslassrohrs (221) direkt oberhalb der Verdampfungsschale (140) erstreckt.

3. Kühlschrank mit einer Funktion zur sauerstoffgesteuerten Frischhaltung nach Anspruch 1, wobei der Frischhalteraum (10) eine ein- und ausfahrbare Schublade (101) aufweist.

4. Kühlschrank mit einer Funktion zur sauerstoffgesteuerten Frischhaltung nach Anspruch 1, ferner aufweisend ein zwischen dem Kühlabteil (11) und dem Kompressorfach (14) angeordnetes Gefrierabteil (12).

## Revendications

1. Réfrigérateur doté d'une fonction de conservation de la fraîcheur par régulation de l'oxygène, comprenant un corps de réfrigérateur (100) présentant un compartiment de compresseur (14) formé au niveau d'une base, destiné au montage d'un compresseur, et un espace de conservation de fraîcheur (10) situé au-dessus du compartiment de compresseur (14), dans lequel le réfrigérateur présente en outre un dispositif de régulation de l'oxygène permettant de réduire la teneur en oxygène dans l'espace de conservation de fraîcheur (10), et le dispositif de régulation de l'oxygène comprend un ensemble de membrane de régulation de gaz (21) et un ensemble d'extraction de gaz (22) ; l'ensemble de membrane de régulation de gaz (21) présente au moins une membrane à atmosphère contrôlée perméable sélectivement aux gaz, la membrane à atmosphère contrôlée présente une face d'entrée d'air entrant en contact avec l'air dans l'espace de conservation de fraîcheur (10) et une face de sortie d'air opposée à la face d'entrée d'air, et l'ensemble de membrane de régulation de gaz (21) est configuré de manière à permettre à un rapport oxygène/azote du gaz entrant par la face de sortie d'air d'être supérieur à un rapport oxygène/azote du gaz présent dans l'espace de conservation de fraîcheur (10) ; l'ensemble d'extraction de gaz (22) est fourni à l'extérieur de l'espace de conservation de fraîcheur (10) et présente une pompe d'extraction de gaz (220) présentant un tuyau d'entrée de gaz (222) en communication avec la face de sortie d'air de la membrane à atmosphère contrôlée et d'un tuyau de sortie de gaz (221) permettant d'évacuer le gaz au niveau de la face de sortie d'air de la membrane à atmosphère contrôlée vers le compartiment de compresseur (14) afin de refroidir le compresseur, **caractérisé en ce que** :
le corps de réfrigérateur (100) présente à l'intérieur une doublure réfrigérante (110) pour définir un compartiment réfrigérant (11), et l'espace de conservation de fraîcheur (10) est situé dans le compartiment réfrigérant (11),
une couche d'isolation thermique est formée à l'extérieur de la doublure réfrigérante (110), et l'ensemble d'extraction de gaz (22) est prévu dans la couche d'isolation thermique,
le compartiment réfrigérateur est fourni au bas du compartiment réfrigérant (11), et la pompe d'extraction de gaz (220) est fournie dans un coin inférieur de la paroi arrière de la paroi intérieure du compartiment réfrigérant (110) et
l'ensemble d'extraction de gaz (22) présente en outre une boîte de logement (223) montée sur la paroi arrière de la doublure réfrigérante (110) et un support de montage (224) relié à la pompe d'extraction de gaz (220) et monté dans la boîte de logement (223) par une pluralité de blocs amortisseurs de chocs (2240) ;
l'ensemble de membrane de régulation de gaz (21) est prévue à l'extérieur d'une paroi supérieure de l'espace de conservation de fraîcheur (10), et une ouverture est prévue à l'extérieur de la paroi supérieure de l'espace de conservation de fraîcheur (10) pour que l'air qui s'y trouve puisse entrer en contact avec la face d'entrée d'air de la membrane à atmosphère contrôlée ;
dans lequel un bac d'évaporation (140) est prévu dans le compartiment de compresseur (14), le réfrigérateur présente en outre un tuyau de drainage (111) relié à la doublure réfrigérante (110) pour drainer l'eau liquide qui s'y trouve dans le bac d'évaporation (140), et le tuyau de sortie de gaz (221) s'approche du tuyau de drainage (111) depuis la pompe d'extraction de gaz (220) et s'étend dans le compartiment de compresseur (14) à travers le tuyau de drainage.

2. Réfrigérateur doté d'une fonction de conservation de fraîcheur par régulation de l'oxygène selon la revendication 1, dans lequel une sortie d'air du tuyau de sortie de gaz (221) s'étend juste au-dessus du bac d'évaporation (140).

3. Réfrigérateur doté d'une fonction de conservation de fraîcheur par régulation de l'oxygène selon la revendication 1, dans lequel l'espace de conservation de fraîcheur (10) présente un tiroir (101) pouvant coulisser à l'intérieur et à l'extérieur.

4. Réfrigérateur doté d'une fonction de conservation de fraîcheur par régulation de l'oxygène selon la revendication 1, présentant en outre un compartiment de congélation (12) situé entre le compartiment réfrigérant (11) et le compartiment de compresseur (14).
